# EUROPEAN PATENT SPECIFICATION

(11) **EP 3 869 658 B1**
(45) Date of publication and mention of the grant of the patent: **01.01.2025**
(21) Application number: 19873766.0
(22) Date of filing: 16.10.2019
(51) Int. Cl.: H02J 7/00

(54) **SMART BALANCING ENERGY CHARGING CONTROL SYSTEM**
INTELLIGENTES AUSGLEICHENDES ENERGIELADUNGSSTEUERUNGSSYSTEM
SYSTÈME DE COMMANDE DE CHARGE D'ÉNERGIE D'ÉQUILIBRAGE INTELLIGENT

(30) Priority: 16.10.2018 KR 20180123166; 15.10.2019 KR 20190127831
(43) Date of publication of application: 25.08.2021
(73) Proprietor: Enercamp Co., Ltd., Dalseo-gu, Daegu 42601 (KR)
(72) Inventor: CHOI, Jung Sub, Daegu 42761 (KR); PARK, Jun Nam, Dalseong-gun, Daegu 42943 (KR)
(74) Representative: Michalski Hüttermann & Partner Patentanwälte mbB
(86) International application number: PCT/KR2019/013542
(87) International publication number: WO 2020/080811

(56) References cited:
- EP-A1- 2 426 804
- EP-A2- 2 278 678
- JP-A- 2008 283 841
- JP-A- 2010 104 155
- KR-A- 20110 038 841
- KR-B1- 101 197 243
- KR-B1- 101 787 729

## Description

### [Technical Field]

The present disclosure relates to a smart balancing energy charging control system.

### [Background Art]

Various electronic items of electrical and electronic equipment which require electricity are usually powered by commercial electricity supplied by an electricity provider (e.g., Korea Electric Power Corporation), by being plugged into power outlets found in homes and offices. In places where there is no commercial electricity available, electronic equipment is often powered by a built-in or removable battery instead of commercial electricity.

EP 2 278 678 A2 discloses a system for, and method of, combining the outputs of multiple, disparate types of power sources and an isolated converter module employed in the same. In one embodiment, the system includes: (1) a plurality of isolated converter modules having power inputs couplable to corresponding disparate types of power sources and a DC-output converter configured to convert power received from at least one of the power sources to DC power and (2) a DC bus coupled to power outputs of the plurality of isolated converter modules and configured to receive and aggregate the DC power. With such system, a universal converter module can be employed to identify and convert power from a variety of conventional and renewable power sources.

EP 2 426 804 A1 discloses a method for charging a battery of an electrical vehicle from an energy storage system for storing electrical energy received from a power grid. The method comprises the step of estimating an amount of electrical energy in the energy storage system that originates from renewable energy sources and the step of charging the battery of the electrical vehicle in response thereto.

Meanwhile, with the widespread adoption of the five-day working week, along with the recent increases in income levels, consumption patterns are gradually changing as people spend more money and time on experiences like travel and leisure and sports activities and less on material goods. A typical example of this is the increasing number of people who enjoy auto camping and the resulting huge growth of related industries.

In line with the growing social interest in outdoor activities, there is a rising demand for batteries from people who want to power their various electronic products. That is, as the numbers of people who enjoy outdoor activities like camping, fishing, and recreating on the water are rising, along with the growing interest in outdoor activities, and outdoor activities such as camping are becoming more family-oriented, more and more people are wanting to use their electronic devices while outdoors. Now that many people consider electronic devices, including laptops and smartphones, to be an essential part of their lives, these are one of the things they will always carry with them when they go camping and they will need electricity to use them. Since there is not enough electricity in most campsites, people might face difficulties using their camping equipment, let alone charging and using their smartphone or laptop.

To solve these issues, many campers buy portable camping batteries to power their electrical and electronic equipment with electricity, but they are still struggling with recharging their portable camping batteries once they are discharged. These portable camping batteries are charged by commercial electricity provided at campsites or charged individually with a small solar power generator, which address some limitations when used in outdoor places where many campers go camping. Korean Utility Model Publication No. 20-2012-0000788 discloses a prior art document.

### [Disclosure]

### [Technical Problem]

The present disclosure has been proposed to solve the above problems, and an aspect of the present disclosure is to provide a smart balancing energy charging control system capable of charging a battery pack with charging power applied from different power sources, that allows the battery pack to be stably charged by the efficient control of power supply from the different power sources by enabling smart balancing energy charging control via charging current control by comparing the charging powers of the different power sources.

Another aspect of the present disclosure is to provide a smart balancing energy charging control system capable of charging a battery pack with charging power applied from different power sources, that enables not only charging through simple power supply but also by efficient multi-power supply control, by selectively controlling the power sources depending on the circumstances or weather conditions during an outdoor activity, thereby enabling efficient use and control of power supply and enhancing the ease of use during outdoor activities such as auto camping.

### [Technical Solution]

In order to achieve the aforementioned aspects, an exemplary embodiment of the present invention provides a smart balancing energy charging control system according to claim 1, including: a multi-power input part connected to different power sources, and receiving power for charging a battery pack from the different power sources; a micro controller unit for performing charging according to a rated power of the battery pack by using the charging power of the different power sources applied via the multi-power input part, and performing smart balancing energy charging control by determining whether predetermined conditions are satisfied; and a battery pack charging connection part coupled to the battery pack, and charging the battery pack by using the charging power applied by the smart balancing energy charging control under the control of the micro controller unit.

The different power sources may include a first power source for receiving a first DC power from a renewable energy source and a second power source for receiving AC power or second DC power from a wall charger.

The multi-power input part may include: a first power input terminal for receiving the first DC power from the renewable energy source; and a second power input terminal for receiving the AC power or the second DC power from the wall charger.

In the smart balancing energy charging control, if the predetermined conditions are satisfied, the battery pack may be charged by increasing the use of the first power source and decreasing the use of the second power source or shutting off the power supply from the second power source.

The predetermined conditions may include conditions in which the energy level of the first power source is higher than a predetermined value.

In the smart balancing energy charging control, the predetermined conditions may include conditions in which the power generation efficiency of the first power source during an outdoor activity is higher than a predetermined value, and, if the predetermined conditions are satisfied, the battery pack may be charged by increasing the current from the first power source and decreasing the current from the second power source or shutting off the power supply from the second power source.

In the smart balancing energy charging control, if the efficiency of the renewable energy source is higher than a setting value, the power from the second power source may be shut off, and charging may be done through the first power source alone.

In the smart balancing energy charging control, a transition between the first power source and the second power source may be made by checking a predetermined setting time and a charging amount.

The micro controller unit may charge the battery pack by using the power supply from one of the different power sources or charge the battery pack using current control by receiving multiple power inputs from the different power sources.

The micro controller unit may perform smart balancing energy charging control by comparing the charging powers of the different power sources, and the smart balancing energy charging control may refer to charging current control of the different power sources.

The micro controller unit may charge the battery pack by using the power supply from one of the different power sources or charge the battery pack via current control by receiving multiple power inputs from the different power sources.

In a case where a rated power for charging the battery pack is 12V/10Ah, the micro controller unit may perform smart balancing energy charging control by using 12V/5Ah of power from a solar charger and 12V/5Ah of power from an adapter charger, the solar charger and the adapter charger being the different power sources, and, if the amount of electricity generated by the solar charger is high due to good weather smart balancing energy charging control may be performed in a preset way by increasing the current from the solar charger and decreasing the current from the wall charger.

In a case where a rated power for charging the battery pack is 12V/10Ah, the micro controller unit may perform smart balancing energy charging control by using 12V/5 Ah of power from a solar charger and 12V/5Ah of power from an adapter charger, the solar charger and the adapter charger being the different power sources, and, if the amount of electricity generated by the solar charger is low due to bad weather, smart balancing energy charging control may be performed in a preset way by decreasing the current from the solar charger and increasing the current from the wall charger.

The battery pack may be an auxiliary battery device for outdoor camping which powers an electric or electronic device with DC power or AC power when the device is used outdoors.

The smart balancing energy charging control system may further include a wireless communication module for enabling IoT, wherein the charging is controlled by receiving the user's schedule information provided by a schedule management service in a smartphone scheduling app or weather information through the wireless communication module via the internet.

The smart balancing energy charging control system controls the charging based on a determination that full charging could be achieved through the renewable energy source alone, without using the wall charger, based on the user's schedule management information and weather information obtained via the internet.

### [Advantageous Effects]

According to the smart balancing energy charging control system disclosed in the present disclosure, it is possible to charge a battery pack with charging power applied from different power sources, and to allow the battery pack to be stably charged by the efficient control of power supply from the different power sources by enabling smart balancing energy charging control via charging current control by determining whether predetermined conditions are satisfied.

In addition, according to the smart balancing energy charging control system disclosed in the present disclosure, it is possible to charge a battery pack with charging power applied from different power sources, and to enable not only charging through simple power supply but also by efficient multi-power supply control, by selectively controlling the power sources depending on the circumstances or weather conditions during an outdoor activity, thereby enabling efficient use and control of power supply and enhancing the ease of use during outdoor activities such as auto camping.

### [Description of Drawings]

FIG. 1 is a block diagram of a smart balancing energy charging control system according to an exemplary embodiment of the present disclosure.
FIG. 2 a block diagram illustrating a configuration of a smart balancing energy charging control system according to an exemplary embodiment of the present disclosure.
FIG. 3 is a block diagram of a smart balancing energy charging control system according to an exemplary embodiment of the present disclosure.
FIG. 4 is a block diagram of a configuration of a multi-power input part applied to a smart balancing energy charging control system according to an exemplary embodiment of the present disclosure.
FIG. 5 is a block diagram illustrating a configuration provided in a main body of a smart balancing energy charging control system according to an exemplary embodiment of the present disclosure.
FIG. 6 is a block diagram illustrating a smart balancing energy charging control system according to another exemplary embodiment of the present disclosure.

### [Mode for Disclosure]

Hereinafter, exemplary embodiments of the present disclosure will be described in detail with reference to the accompanying drawings so that those skilled in the art can easily carry out the present disclosure. In the following detailed description of the exemplary embodiments of the present disclosure, a detailed description of known functions and configurations incorporated herein will be omitted when it may make the subject matter of the present disclosure rather unclear. In the drawings, like reference numerals are used throughout the drawings.

In addition, throughout the specification, when a part is referred to as being "connected" to another part, it may include not only a case in which they are "directly connected" but also a case in which they are "indirectly connected" in between. Also, when it is referred to as including an element, it means including other elements, rather than excluding other elements, unless specifically stated otherwise.

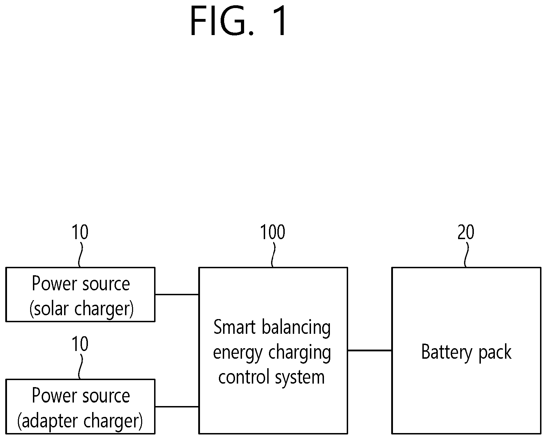

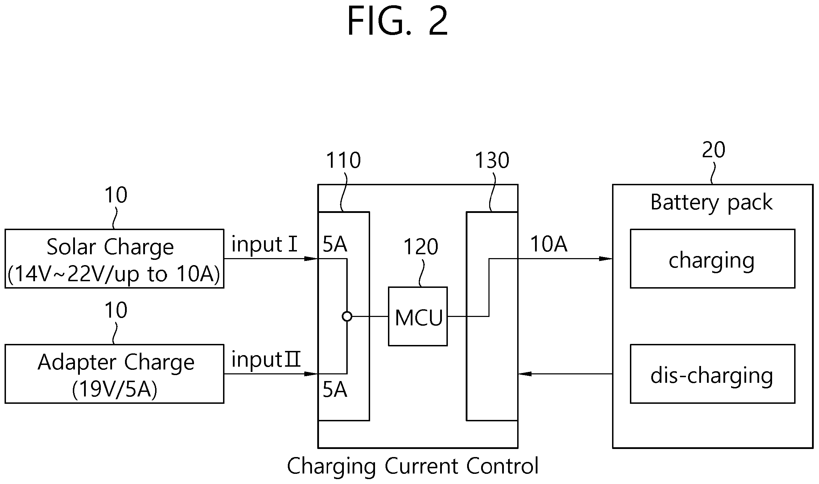

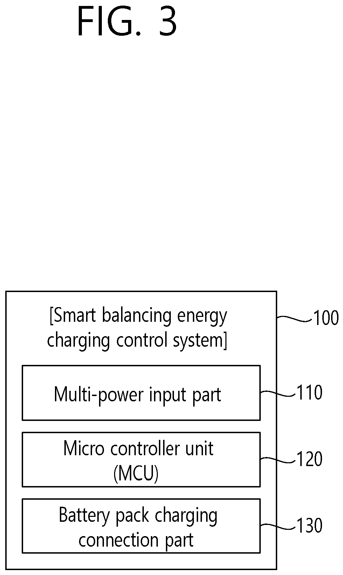

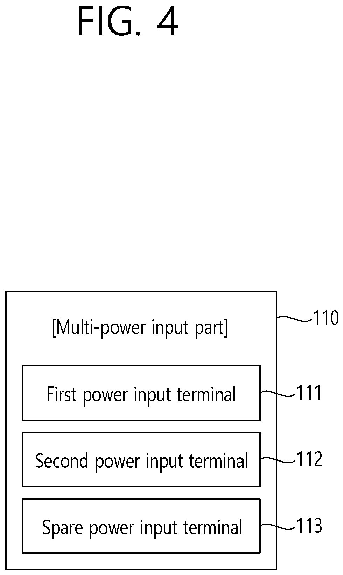

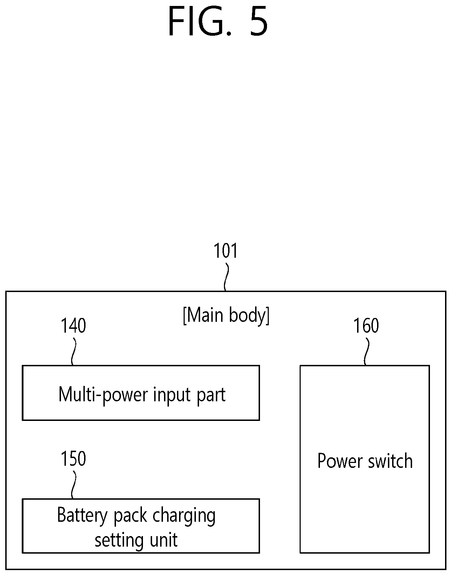

FIG. 1 is a diagram illustrating an overall system connection configuration for illustrating a concept of a smart balancing energy charging control system according to an exemplary embodiment of the present disclosure; FIG. 2 illustrates a configuration of a smart balancing energy charging control system according to an exemplary embodiment of the present disclosure; FIG. 3 is a functional block diagram illustrating a configuration of a smart balancing energy charging control system according to an exemplary embodiment of the present disclosure; FIG. 4 is a functional block diagram illustrating a configuration of a multi-power input part applied to a smart balancing energy charging control system according to an exemplary embodiment of the present disclosure; and FIG. 5 is a functional block diagram illustrating a configuration provided in a main body of a smart balancing energy charging control system according to an embodiment of the present disclosure. As shown in FIGS. 1 to 5, a smart balancing energy charging control system 100 according to an exemplary embodiment of the present disclosure is configured to include a multi-power source input unit(or part) 110, a micro controller unit 120, and a battery pack charging connection part 130.

The multi-power source input unit(or part) 110 is configured to be connected to respective different power sources 10 and receive power for charging the battery pack 20 or a battery management system (BMS) from the different power sources 10. As shown in FIG. 4, the multi-power source input unit(or part) 110 is configured to include a first power source input terminal 111 for receiving photoelectrically converted DC power from a solar power generation module and a second power source input terminal 112 for receiving DC power from an adapter which converts wall power into DC power and then supplying the DC power. In addition, the multi-power source input unit(or part) 110 includes a spare power source input terminal 113, in addition to the first power source input terminal 111 for receiving solar power and the second power source input terminal 112 for receiving power from the adapter. In this case, the spare power source input terminal 113 may be used as a spare connection terminal when a connection failure occurs in the first and second power source input terminals 111 and 112.

The different power sources 10 may include a solar charger for supplying the photoelectrically converted DC power from the solar power generation module and an external adapter charger which converts wall power (AC110V or AC220V) into DC power and supplies the DC power. Alternatively, the adapter charger may be implemented internally to the smart balancing energy charging control system. Herein, in addition to the solar power generation module, the power source 10 using solar power may include various renewable power sources, such as a small-sized wind power generator or a small-sized self-generator that can be used outdoors - for example, a self-generator which generates power like a watermill does using a stream. In addition, the battery pack 20 is an auxiliary battery device for outdoor camping which powers an electric or electronic device DC power or AC power when the device is used outdoors.

The micro controller unit 120 is configured to perform smart balancing energy charging control by comparing the charging powers of the different power sources 10, in order to perform charging according to a rated power source of the battery pack 20 using the charging power applied from the different power sources 10 via the multi-power source input part 110. The micro controller unit 120 performs the smart balancing energy charging control by comparing the charging power of the different power sources 10, in which the smart balancing energy charging control refers to charging current control of the different power sources 10. Charging by voltage control may lead to over-charging due to overvoltage when a battery is fully charged, which can damage the battery if it is charged for a long time and thus can affect the battery life. On the other hand, the smart balancing energy charging control system 100 prevents overcharging of the battery and prolongs the battery life compared to the existing products, by performing fast charging by current control and controlling the amount of current once the battery is fully charged. What makes the current control technology of the smart balancing energy charging control system 100 according to an exemplary embodiment of the present disclosure distinct from the existing products is that, based on accurate measurements of the amount of charge required for a battery pack to reach a fully charged state, the smart balancing energy charging control system 100 according to an exemplary embodiment of the present disclosure allows for charging items like battery packs more stably and efficiently by current control, compared with the usual way of charging them by voltage control.

Alternatively, the micro controller unit 120 may perform smart charging balancing control by determining whether predetermined conditions are satisfied. The predetermined conditions may include conditions in which the energy level, power, or energy efficiency of a renewable power source is higher than a predetermined value. For example, the energy level, power, or energy efficiency of a renewable power source may be at least 5 W and higher than 10 % of the maximum power. For example, if a renewable energy source with a maximum power output of 100 W delivers an input power with an energy efficiency of 10 W or higher and satisfies a minimum value of 5 W, the power from the wall charger may be shut off and the renewable energy power source may be used as an input source.

In the smart balancing energy charging control, if the predetermined conditions are satisfied, the battery pack may be charged by increasing the use of the renewable power source and decreasing the use of the adapter charger or shutting off the power supply from the adapter charger. In the smart balancing energy charging control, the predetermined conditions include conditions in which the power generation efficiency of the renewable power source during an outdoor activity is higher than a predetermined value, and, if the predetermined conditions are satisfied, the battery pack may be charged by increasing the current from the renewable power source and decreasing the current from the adapter charger or shutting off the power supply from the adapter charger.

Moreover, in the smart balancing energy charging control, if the input efficiency of the renewable energy source is higher than a set value during multiple power inputs, the power from the wall charger (adapter charger) is shut off, and charging is done through the renewable energy source alone, and a flexible transition between the renewable energy source and the wall charger may be made by checking a predetermined setting time and a charging amount. Thus, the user can charge items like battery packs easily and conveniently without resorting to any particular measure for charging. For example, in the smart balancing energy charging control, if the input efficiency of the renewable energy source is higher than 10 % or more of the charging efficiency of the wall charger during multiple power inputs, the power from the wall charger (adapter charger) is shut off, and charging is done through the renewable energy source alone. For example, given that the wall charger has a charging efficiency of 60 Wh, with 10 % of which being 6 W, if a renewable energy source with a maximum power output of 100 W delivers an input power with an energy efficiency of 6 W or higher, which corresponds to 10 % or more of the charging efficiency of the wall charger, the power from the wall charger may be shut off, and the renewable energy power source may be used as an input source.

In addition, the micro controller unit 120 may charge the battery pack 20 by using the power supply from one of the different power sources 10 or charge the battery pack 20 by current control by receiving multiple power inputs from the different power sources 10. That is, the micro controller unit 120 may function to allow efficient power supply by current control by receiving multiple power inputs, as well as charging through simple power supply.

Furthermore, in a case where a rated power for charging the battery pack 20 is 12V/10Ah, the micro controller unit 120 performs smart balancing energy charging control by using 12V/5Ah of power from a solar charger and 12V/5Ah of power from an adapter charger, the solar charger and the adapter charger being the different power sources 10, and, if the amount of electricity generated by the solar charger is high due to good weather, smart balancing energy charging control may be performed in a preset way by increasing the current from the solar charger and decreasing the current from the wall charger. That is, when charging the battery pack 20 during an outdoor activity such as camping by using a solar charger and a wall charger as multiple power sources, if the generation efficiency of the solar charger is high due to good weather, smart balancing energy charging control may be performed by decreasing the use of the wall charger, which incurs an expense, and enabling charging through efficient power supply using the solar charger.

On the other hand, in a case where that a rated power for charging the battery pack 20 is 12V/10Ah, the micro controller unit 120 performs smart balancing energy charging control by using 12V/5Ah of power from a solar charger and 12V/5Ah of power from an adapter charger, the solar charger and the adapter charger being the different power sources 10, and, if the amount of electricity generated by the solar charger is low due to bad weather, smart balancing energy charging control may be performed in a preset way by decreasing the current from the solar charger and increasing the current from the wall charger. Here, the rated power of 12V/10Ah for charging the battery pack 20 is only an example of implementation of the present disclosure but not limited thereto, and various rated powers may be used.

The battery pack charging connection part 130 is a charging power source that is connected to the battery pack 20 or the battery management system (BMS) and applied by smart balancing energy charging control under control of the micro controller unit 120, and is also a component for charging the battery management system (BMS).

The smart balancing energy charging control system 100 according to the present disclosure may include a charging state display 140, a battery pack charging setting unit 150, and a power switch 160, as shown in FIG. 5, in addition to the multi-power input part 110, the micro controller unit 120, and the battery pack charging connection part 130. Here, the charging state display 140 may display charging voltage, charging rate, etc., showing the charging state of the battery pack 20, the battery pack charging setting unit 150 may be an operation unit for setting the rated power for charging the battery pack 20, and the power switch 160 may function as a power on/off switch of the smart balancing energy charging control system 100. Also, the main body 101 may have a structure with a plurality of through-holes (not shown) for reducing heat generated during fast charging and come in the shape of a box with a handle (not shown) for better portability and ease of use.

As described above, the smart balancing energy charging control system according to an exemplary embodiment of the present disclosure allows for charging a battery pack with charging power applied from different power sources, and allows the battery pack to be stably charged by the efficient control of power supply from the different power sources by enabling smart balancing energy charging control by charging current control by comparing the charging powers of the different power sources. Particularly, it is possible to charge a battery pack with charging power applied from different power sources, and to enable not only charging through simple power supply but also efficient multi-power supply control, by selectively controlling the power sources depending on the circumstances or weather conditions during an outdoor activity, thereby enabling efficient use and control of power supply and enhancing the ease of use during outdoor activities such as auto camping.

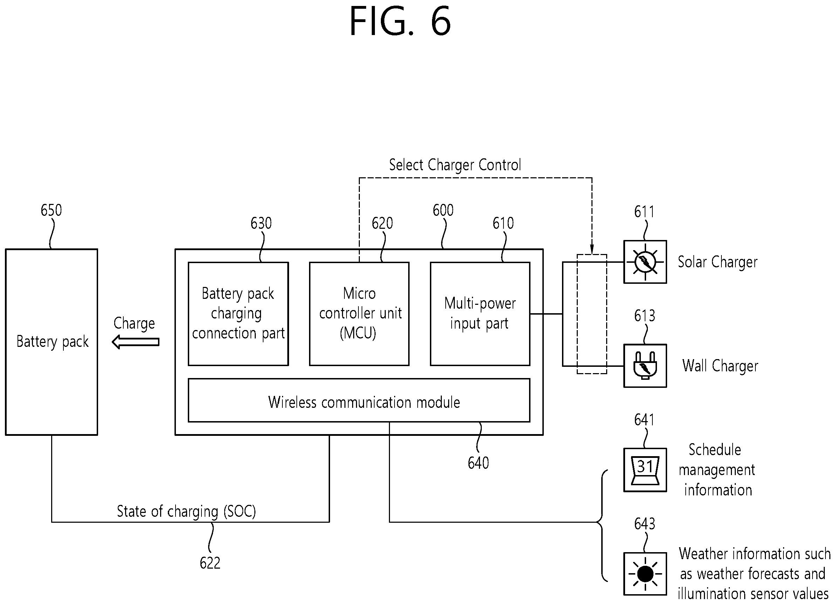

FIG. 6 is a block diagram illustrating a smart balancing energy charging control system according to another exemplary embodiment of the present disclosure.

Referring to FIG. 6, the smart balancing energy charging control system 600 according to another exemplary embodiment of the present disclosure includes a multi-power input part 610, a micro controller unit 620, a battery pack charging connection part 630, and a wireless communication module 640 for enabling IoT.

The multi-power input part 610, the micro controller unit 620, and the battery pack charging connection part 630 of FIG. 6 are components corresponding to the multi-power input part 110, the micro controller unit 120, and the battery pack charging connection part 130 of FIG. 3, and detailed descriptions of them will be omitted.

The smart balancing energy charging control system 600 may allow for charging a battery pack more efficiently by receiving the user's schedule information provided by a schedule management service in a smartphone scheduling app or weather information 643 together through the wireless communication module 640 via the internet, let alone weather forecasts and illumination sensor values, as well as voltage/current sensing data for multiple power inputs.

For example, let's say that the user has an eventset in a scheduling app on their smartphone to go camping this Saturday. In that case, the smart balancing energy charging control system 600 may obtain the user's schedule management information 641 via the internet through the wireless communication module 640, receive information predicting good weather over this week through the wireless communication module 640, based on weather information 643 such as weather forecasts, and reach a determination that full charging will be achieved in five days through a renewable energy source such as a solar charger 611 alone, without using a wall charger 613, once the user starts charging a battery pack 650 this Monday. Based upon this determination, the smart balancing energy charging control system 600 may control the charging.

Moreover, in the foregoing embodiment, the smart balancing energy charging control system 600 may check the charging state 622, and, upon determining that full charging will not be achieved with the time remaining before this Friday because of a low charging rate, may control the selection of a charging power source to automatically select the wall charger.

The present disclosure described so far may be modified or applied into various forms by a person having ordinary skill in the art, and the scope of the technical concept of the present disclosure should be determined based on the following claims.

### Legend of Reference Numbers

10, 611, 613 : Power source
20: Battery pack
100, 600: Smart balancing energy charging control system
101: Battery pack
110, 610: Multi-power input part
111: First power input terminal
112: Second power input terminal
113: Spare power input terminal
120, 620: Micro controller unit
130, 630: Battery pack charging connection part
140: Charging state display part
150: Battery pack charging setting unit
160: Power switch

## Claims

1. A smart balancing energy charging control system comprising:
a multi-power input part (110, 610) connectable to different power sources (10, 611, 613), and configured to receive power for charging a battery pack (20) from the different power sources (10, 611, 613), the different power sources (10, 611, 613) comprising a primary power source (10, 611, 613) for receiving a first DC power from a renewable energy source and a secondary power source (10, 611, 613) for receiving AC power or second DC power on the basis of a commercial power source (10, 611, 613);
a micro controller unit (120, 620) configured to perform charging according to a rated power of the battery pack (20) by using the charging power of the different power sources (10, 611, 613) applied by the multi-power input part (110, 610), and configured to perform smart charging energy balancing control by determining whether predetermined conditions are satisfied;
a battery pack charging connection part (130, 630) to be coupled to the battery pack (20), and configured to charge the battery pack (20) by using the charging power applied through the smart charging energy balancing control under the control of the micro controller unit (120, 620); and
a wireless communication module capable of communicating with a user's smartphone,
wherein the micro-controller unit is configured to receive the user's camping schedule information from a smartphone schedule application through the wireless communication module, and the micro-controller unit is further configured to select the primary source or the secondary power source (10, 611, 613), and the micro-controller unit is further configured to fully charge the battery pack (20) with the selected power sources (10, 611, 613) based on the user's camping schedule information,
wherein the smart balancing energy charging control system (100,600) is configured to control the charging based on a determination that full charging will be achieved by the renewable energy source alone, without using a wall charger, based on the user's schedule management information and weather information obtained via the internet.

2. The smart balancing energy charging control system of claim 1, wherein the multi-power input part (110, 610) comprises:
a first power input terminal (111) configured to receive the first DC power from the renewable energy source; and
a second power input terminal (112) configured to receive the AC power or the second DC power from the wall charger.

3. The smart balancing energy charging control system of claim 1, wherein, in the smart charging balancing control, if the predetermined conditions are satisfied, the battery pack (20) is charged by increasing the use of the primary power source (10, 611, 613) and decreasing the use of the secondary power source (10, 611, 613) or shutting off the power supply from the secondary power source (10, 611, 613).

4. The smart balancing energy charging control system of claim 1, wherein the predetermined conditions include conditions in which the energy level of the primary power source (10, 611, 613) is higher than a predetermined value.

5. The smart balancing energy charging control system of claim 1, wherein, in the smart charging balancing control, the predetermined conditions include conditions in which the power generation efficiency of the primary power source (10, 611, 613) during an outdoor activity is higher than a predetermined value, and, if the predetermined conditions are satisfied, the battery pack (20) is charged by increasing the current from the primary power source (10, 611, 613) and decreasing the current from the secondary power source (10, 611, 613) or shutting off the power supply from the secondary power source (10, 611, 613).

6. The smart balancing energy charging control system of claim 1, wherein, in the smart charging balancing control, if the efficiency of the renewable energy source is higher than a setting value, the power from the secondary power source (10, 611, 613) is shut off, and charging is done through the primary power source (10, 611, 613) alone.

7. The smart balancing energy charging control system of claim 1, wherein, in the smart charging balancing control, a transition between the primary power source (10, 611, 613) and the secondary power source (10, 611, 613) is made by checking a predetermined setting time and a charging amount.

8. The smart balancing energy charging control system of claim 1, wherein the smart charging balancing control refers to charging current control of the different power sources (10, 611, 613).

9. The smart balancing energy charging control system of claim 8, wherein the micro controller unit (120, 620) is configured to charge the battery pack (20) by using the power supply from one of the different power sources (10, 611, 613) or to charge the battery pack (20) via current control by receiving multiple power inputs from the different power sources (10, 611, 613).

## Patentansprüche

1. Intelligentes, ausgleichendes Energieladesteuerungssystem, mit:
einem Mehrfachenergieversorgungseingangsteil (110, 610), mit verschiedenen Energiequellen (10, 611, 613) verbindbar und dafür konfiguriert, Energie zum Laden eines Batteriepacks (20) von den verschiedenen Energiequellen (10, 611, 613) zu empfangen, wobei die verschiedenen Energiequellen (10, 611, 613) aufweisen:
eine primäre Energiequelle (10, 611, 613) zum Empfangen eines ersten Gleichstroms von einer erneuerbaren Energiequelle und eine sekundäre Energiequelle (10, 611, 613) zum Empfangen von Wechselstrom oder zweitem Gleichstrom auf der Basis einer kommerziellen Energiequelle (10, 611, 613);
eine Mikrocontrollereinheit (120, 620), dafür konfiguriert, einen Ladevorgang gemäß einer Nennleistung des Batteriepacks (20) unter Verwendung der Ladeleistung der verschiedenen Energiequellen (10, 611, 613) auszuführen, die über das Mehrfachenergieversorgungseingangsteil (110, 610) zugeführt wird, und dafür konfiguriert, eine intelligente Ladeenergieausgleichssteuerung durch Bestimmen, ob vorgegebene Bedingungen erfüllt sind, auszuführen;
ein Batteriepack-Ladeverbindungsteil (130, 630), dazu vorgesehen, mit dem Batteriepack (20) verbunden zu werden, und dafür konfiguriert, das Batteriepack (20) unter Verwendung der durch die intelligente Ladeenergieausgleichssteuerung zugeführten Ladeleistung unter der Steuerung der Mikrocontrollereinheit (120, 620) zu laden; und
ein drahtloses Kommunikationsmodul, das in der Lage ist, mit dem Smartphone eines Benutzers zu kommunizieren,
wobei die Mikrocontrollereinheit dafür konfiguriert ist, Campingzeitplaninformation des Benutzers von einer Smartphone-Zeitplananwendung über das drahtlose Kommunikationsmodul zu empfangen, und die Mikrocontrollereinheit konfiguriert ist, die primäre Energiequelle oder die sekundäre Energiequelle (10, 611, 613) auszuwählen, und die Mikrocontrollereinheit dazu konfiguriert ist, das Batteriepack (20) mit den ausgewählten Energiequellen (10, 611, 613) basierend auf der Campingzeitplaninformation des Benutzers vollständig zu laden,
wobei das intelligente ausgleichende Energieladesteuerungssystem (100, 600) konfiguriert ist, den Ladevorgang basierend auf einer Bestimmung, dass eine vollständige Aufladung allein durch die erneuerbare Energiequelle erreicht wird, ohne ein Wandladegerät zu verwenden, basierend auf Zeitplanmanagementinformation des Benutzers und über das Internet erhaltener Wetterinformation zu steuern.

2. Intelligentes, ausgleichendes Energieladesteuerungssystem nach Anspruch 1, wobei das Mehrfachenergieversorgungseingangsteil (110, 610) aufweist:
einen ersten Energieversorgungseingangsanschluss (111), der konfiguriert ist, den ersten Gleichstrom von der erneuerbaren Energiequelle zu empfangen; und
einen zweiten Energieversorgungseingangsanschluss (112), der konfiguriert ist, den Wechselstrom oder den zweiten Gleichstrom vom Wandladegerät zu empfangen.

3. Intelligentes, ausgleichendes Energieladesteuerungssystem nach Anspruch 1, wobei in der intelligenten Ladungsausgleichssteuerung, wenn die vorgegebenen Bedingungen erfüllt sind, das Batteriepack (20) aufgeladen wird, indem die Nutzung der primären Energiequelle (10, 611, 613) erhöht und die Nutzung der sekundären Energiequelle (10, 611, 613) vermindert wird oder die Energiezufuhr von der sekundären Energiequelle (10, 611, 613) abgeschaltet wird.

4. Intelligentes, ausgleichendes Energieladesteuerungssystem nach Anspruch 1, wobei die vorgegebenen Bedingungen Bedingungen einschließen, bei denen das Energieniveau der primären Energiequelle (10, 611, 613) höher als ein vorgegebener Wert ist.

5. Intelligentes, ausgleichendes Energieladesteuerungssystem nach Anspruch 1, wobei in der intelligenten Ladeausgleichssteuerung die vorgegebenen Bedingungen Bedingungen einschließen, bei denen die Energieerzeugungseffizienz der primären Energiequelle (10, 611, 613) während einer Outdoor-Aktivität höher ist als ein vorgegebener Wert, und, wenn die vorgegebenen Bedingungen erfüllt sind, das Batteriepack (20) durch Erhöhen des Stroms von der primären Energiequelle (10, 611, 613) und Vermindern des Stroms von der sekundären Energiequelle (10, 611, 613) oder Abschalten der Energiezufuhr von der sekundären Energiequelle (10, 611, 613) geladen wird.

6. Intelligentes, ausgleichendes Energieladesteuerungssystem nach Anspruch 1, wobei bei der intelligenten Ladeausgleichssteuerung, wenn die Effizienz der erneuerbaren Energiequelle höher ist als ein Setzwert, die Energie von der sekundären Energiequelle (10, 611, 613) abgeschaltet wird und der Ladevorgang allein über die primäre Energiequelle (10, 611, 613) erfolgt.

7. Intelligentes, ausgleichendes Energieladesteuerungssystem nach Anspruch 1, wobei bei der intelligenten Ladeausgleichssteuerung ein Übergang zwischen der primären Energiequelle (10, 611, 613) und der sekundären Energiequelle (10, 611, 613) durch Prüfen einer vorgegebenen Zeiteinstellung und einer Lademenge erfolgt.

8. Intelligentes, ausgleichendes Energieladesteuerungssystem nach Anspruch 1, wobei sich die intelligente Ladeausgleichssteuerung auf die Ladestromsteuerung der verschiedenen Energiequellen (10, 611, 613) bezieht.

9. Intelligentes, ausgleichendes Energieladesteuerungssystem nach Anspruch 8, wobei die Mikrocontrollereinheit (120, 620) konfiguriert ist, das Batteriepack (20) unter Verwendung der Energieversorgung von einer der verschiedenen Energiequellen (10, 611, 613) zu laden oder das Batteriepack (20) über eine Stromsteuerung durch Empfangen mehrerer Energieversorgungseingangssignale von den verschiedenen Energiequellen (10, 611, 613) zu laden.

## Revendications

1. Système de contrôle d'équilibrage intelligent d'un chargement en énergie comprenant :
une partie multi-entrée d'alimentation (110, 610) pouvant être connectée à différentes sources d'alimentation (10, 611, 613), et conçue pour recevoir une alimentation afin de charger un bloc-batterie (20) à partir des différentes sources d'alimentation (10,611,613), les différentes sources d'alimentation (10, 611, 613) comprenant une source d'alimentation primaire (10, 611, 613) destinée à recevoir une première alimentation CC à partir d'une source d'énergie renouvelable et une source d'alimentation secondaire (10, 611, 613) destiné à recevoir une alimentation CA ou une seconde alimentation CC sur la base d'une source d'alimentation commerciale (10, 611, 613) ;
une unité de microcontrôleur (120, 620) conçue pour réaliser un chargement selon une alimentation nominale du bloc-batterie (20) en utilisant l'alimentation de chargement des différentes sources d'alimentation (10, 611, 613) appliquées par la partie multi-entrée d'alimentation (110, 610), et conçue pour réaliser un contrôle d'équilibrage intelligent de l'énergie de chargement en déterminant si des conditions prédéterminées sont satisfaites ;
une partie de connexion de chargement de bloc-batterie (130, 630) à coupler au bloc-batterie (20), et conçue pour charger le bloc-batterie (20) en utilisant l'alimentation de chargement appliquée à travers le contrôle d'équilibrage intelligent d'énergie de chargement sous le contrôle de l'unité de microcontrôleur (120, 620) ; et
un module de communication sans fil capable de communiquer avec le smartphone d'un utilisateur,
dans lequel l'unité de microcontrôleur est conçue pour recevoir les informations de calendrier de camping de l'utilisateur à partir d'une application de calendrier de smartphone à travers le module de communication sans fil, et l'unité de microcontrôleur est conçue pour sélectionner la source primaire ou la source d'alimentation secondaire (10, 611, 613), et l' l'unité de microcontrôleur est aussi conçue et pour charger entièrement le bloc-batterie (20) avec les sources d'alimentation (10, 611, 613) sélectionnées en se basant sur les informations de calendrier de camping de l'utilisateur,
dans lequel le système de contrôle d'équilibrage intelligent d'un chargement en énergie (100, 600) est conçu pour contrôler le chargement en se basant sur une détermination selon laquelle un chargement complet sera atteint par la source d'énergie renouvelable seule, sans utiliser de chargeur mural, en se basant sur les informations de gestion de calendrier de l'utilisateur et sur les informations météorologiques obtenues par Internet.

2. Système de contrôle d'équilibrage intelligent d'un chargement en énergie selon la revendication 1, dans lequel la partie multi-entrée d'alimentation (110, 610) comprend :
un premier bornier d'entrée d'alimentation (111) conçu pour recevoir la première alimentation CC depuis la première source d'énergie renouvelable ; et
un second bornier d'entrée d'alimentation (112) conçu pour recevoir l'alimentation CA ou la seconde alimentation CC depuis le chargeur mural.

3. Système de contrôle d'équilibrage intelligent d'un chargement en énergie selon la revendication 1, dans lequel, dans le contrôle d'équilibrage intelligent de chargement, si les conditions prédéterminées sont satisfaites, le bloc-batterie (20) est chargé en augmentant l'utilisation de la source d'alimentation primaire (10, 611, 613) et en diminuant l'utilisation de la source d'alimentation secondaire (10, 611, 613) ou en coupant l'alimentation électrique de la source d'alimentation secondaire (10, 611, 613).

4. Système de contrôle d'équilibrage intelligent d'un chargement en énergie selon la revendication 1, dans lequel les conditions prédéterminées incluent des conditions dans lesquelles le niveau d'énergie de la source d'alimentation primaire (10, 611, 613) est supérieur à une valeur prédéterminée.

5. Système de contrôle d'équilibrage intelligent d'un chargement en énergie selon la revendication 1, dans lequel, dans le contrôle intelligent d'équilibrage de chargement, les conditions prédéterminées incluent des conditions dans lesquelles l'efficacité de génération d'alimentation de la source d'alimentation primaire (10, 611, 613) pendant une activité en extérieur est supérieure à une valeur prédéterminée, et, si les conditions prédéterminées sont satisfaites, le bloc-batterie (20) est chargé en augmentant le courant de la source d'alimentation primaire (10, 611, 613) et en diminuant le courant de la source d'alimentation secondaire (10, 611, 613) ou en coupant l'alimentation électrique de la source d'alimentation secondaire (10, 611, 613).

6. Système de contrôle d'équilibrage intelligent d'un chargement en énergie selon la revendication 1, dans lequel, dans le contrôle d'équilibrage intelligent de chargement, si l'efficacité de la source d'énergie renouvelable est supérieure à une valeur de consigne, l'alimentation depuis la source d'alimentation secondaire (10, 611, 613) est coupée, et le chargement est effectué à travers la source d'alimentation primaire (10, 611, 613) seule.

7. Système de contrôle d'équilibrage intelligent d'un chargement en énergie selon la revendication 1, dans lequel, dans le contrôle d'équilibrage intelligent de chargement, une transition entre la source d'alimentation primaire (10, 611, 613) et la source d'alimentation secondaire (10, 611, 613) est effectuée en vérifiant un temps de consigne et une quantité de chargement prédéterminés.

8. Système de contrôle d'équilibrage intelligent d'un chargement en énergie selon la revendication 1, dans lequel le contrôle d'équilibrage intelligent de chargement désigne un contrôle de courant de chargement des différentes sources d'alimentation (10, 611, 613).

9. Système de contrôle d'équilibrage intelligent d'un chargement en énergie selon la revendication 8, dans lequel l'unité de microcontrôleur (120, 620) est conçue pour charger le bloc-batterie (20) en utilisant l'alimentation électrique de l'une des différentes sources d'alimentation (10, 611, 613) ou pour charger le bloc-batterie (20) par le biais du contrôle de courant en recevant plusieurs entrées d'alimentation depuis les différentes sources d'alimentation (10, 611, 613).
